# EUROPÄISCHE PATENTANMELDUNG

(11) **EP 1 506 819 A2**
(43) Veröffentlichungstag der Anmeldung: **16.02.2005**
(21) Anmeldenummer: 04018226.3
(22) Anmeldetag: 02.08.2004
(51) Int. Cl.: B05B 13/04

(54) **Vorrichtung zum Behandeln der Oberfläche von Werkstücken, insbesondere von Fahrzeugkarosserien**

(30) Priorität: 14.08.2003 DE 10337803
(71) Anmelder: EISENMANN Maschinenbau GmbH & Co. KG, 71032 Böblingen (DE)
(72) Erfinder: Wetzel, Achim, 74321 Bietigheim-Bissingen (DE)
(74) Vertreter: Ostertag, Ulrich, Dr.

(57) **Zusammenfassung**

Eine Vorrichtung (1) zum Behandeln der Oberfläche von Werkstücken (2), insbesondere Fahrzeugkarosserien, umfasst ein ständerartiges Portal (3). Dieses besitzt eine Durchgangsöffnung (50), in welche ein Werkstück (2) einführbar ist. An dem Portal (3) ist mindestens eine Führungsschiene (12, 13) befestigt, die bogen- oder ringförmig um das Werkstück (2) geführt ist. Entlang der Führungsschiene (12, 13) ist mindestens ein Schlitten (14, 15, 16, 17) vorzugsweise motorisch verfahrbar, der einen Haltearm (18, 19, 20, 21) für das Werkzeug (22, 23, 24, 25) trägt. Letzterer ist so ausgestaltet, daß das Werkzeug (22, 23, 24, 25) in Richtung auf das Werkstück (2) verstellt und in unterschiedliche Winkellagen gegenüber der Oberfläche des Werkstücks (2) gebracht werden kann. Zusätzlich ist eine Einrichtung vorgesehen, mit welcher ein Relativbewegung zwischen Werkstück (2) und Werkzeug (22, 23, 24, 25) in Achsrichtung der Durchgangsöffnung (50) herbeigeführt werden kann. Diese Vorrichtung (1) ist sehr variabel, ermöglicht eine rasche Bewegung des Werkzeugs (22, 23, 24, 25) mit hoher Geschwindigkeit und Dynamik sowie großer Präzision.

## Beschreibung

Die Erfindung betrifft eine Vorrichtung zum Behandeln der Oberfläche von Werkstücken, insbesondere von Fahrzeugkarosserien, mit
a) einem auf die Oberfläche des Werkstückes einwirwirkenden Werkzeug;
b) einer Führungseinrichtung für das Werkzeug, die so steuerbar ist, daß das Werkzeug einer vorgegebenen Linie folgt.

In verschiedensten Industriegebieten ist es erforderlich, verhältnismäßig große, lange und/oder kompliziert geformte Werkstücke an ihrer Oberfläche zu bearbeiten. Dies gilt beispielsweise und insbesondere für die Herstellung von Fahrzeugkarosserien. Unter einer "Oberflächenbehandlung" werden vorliegend alle Vorgänge verstanden, welche nicht in den Werkstoff des Werkstückes eingreifen sondern auf die Oberfläche dieser Werkstücke begrenzt sind. In Frage kommen insbesondere das Kleben, das Abdichten von Nähten, das Aufbringen einer Lack-, Wachsoder Dämmschicht, das Aushärten einer aufgebrachten Schicht, insbesondere unter dem Einfluß von UV-Strahlen, das Waschen öder Reinigen. Das jeweils eingesetzte Werkzeug ist an den entsprechenden Behandlungsvorgang angepaßt. So werden beispielsweise zum Aufbringen von Schichten auf das Werkstück Spritzpistolen oder andere Applikationsgeräte eingesetzt, zum Waschen Sprüh- oder Flutungsdüsen, zum Reinigen Bürsten oder Federn und zum UV-Aushärten UV-Leuchten als Werkzeug verwendet. Da das Werkzeug klein gegenüber der Oberfläche des Werkstückes ist, muß es gegenüber dem Werkstück entlang einer vorgegebenen Linie bewegt werden, während der Bearbeitungsvorgang stattfindet.

Soweit bisher derartige Oberflächenbehandlungen überhaupt automatisiert und nicht von Hand durchgeführt werden, finden im allgemeinen Roboter mit mehrachsigen Roboterarmen Verwendung. Damit die Oberfläche dieser großen Werkstücke überall erreicht werden kann, müssen die Roboterarme verhältnismäßig lang und damit schwer sein. Dies bedeutet jedoch, daß die Geschwindigkeit und die Dynamik, mit welcher die am Ende des Roboterarmes getragenen Werkzeuge bewegt werden, nur beschränkt sind. Auch die Genauigkeit der Bewegungsführung ist bei sehr langen Roboterarmen beeinträchtigt.

Aufgabe der vorliegenden Erfindung ist es, eine Vorrichtung der eingangs genannten Art zu schaffen, bei welcher eine sehr schnelle, mit hoher Dynamik und Präzision erfolgende Bewegung des die Oberflächenbehandlung durchführenden Werkzeuges möglich ist.

Diese Aufgabe wird erfindungsgemäß dadurch gelöst, daß die Führungseinrichtung umfaßt:
c) ein ständerartiges Portal, das seinerseits aufweist:
   ca) eine Durchgangsöffnung, in welche ein Werkstück einführbar ist;
   cb) mindestens eine Führungsschiene, die an dem Portal befestigt ist und bogen- oder ringförmig um das Werkstück geführt ist;
   cc) mindestens einen entlang der Führungsschiene vorzugsweise motorisch verfahrbaren Schlitten;
   cd) einen an dem Schlitten befestigten Haltearm, der an seinem freien Ende das Werkzeug trägt und so ausgebildet ist, daß das Werkzeug in Richtung auf das Werkstück verstellbar und in unterschiedliche Winkellagen gegenüber der Oberfläche des Werkstückes gebracht werden kann;
d) eine Einrichtung, mit welcher eine Relativbewegung zwischen Werkstück und Werkzeug in Achsrichtung der Durchgangsöffnung herbeigeführt werden kann.

"Kernstück" der vorliegenden Erfindung ist das ständerartige Portal, in dessen Durchgangsöffnung das Werkstück bei der Oberflächenbehandlung positioniert ist. Mit Hilfe des an der Führungsschiene des Portals verfahrbaren Schlittens, der über den Haltearm das Werkzeug trägt, und mit Hilfe der Einrichtung, welche eine Relativbewegung zwischen Werkzeug und Werkstück in Richtung der Achse der Durchgangsöffnung ermöglicht, läßt sich das Werkzeug in eine "Rohposition" zu Beginn des Bearbeitungsvorganges bringen, von der aus das Werkzeug dann bei der eigentlichen Oberflächenbehandlung auf kurzem Wege alle zu bearbeitenden Oberflächenbereiche erreicht. Nur ausnahmsweise ist während der Oberflächenbearbeitung selbst ein Verfahren des Schlittens entlang des Portales oder eine über die eigene Reichweite des Haltearmes hinausreichende Relativbewegung zwischen Werkstück und Werkzeug in Achsrichtung der Durchgangsöffnung erforderlich. Der Haltearm kann auf diese Weise verhältnismäßig kurz gebaut werden. Die bei der Bewegung des Haltearmes zu beschleunigenden Massen sind verhältnismäßig gering, so daß hohe Geschwindigkeiten und hohe Beschleunigungen und Verzögerungen erreichbar sind. Die verhältnismäßig geringe Länge des Haltearmes gewährleistet darüber hinaus eine hohe Präzision der Bewegungsführung.

Je nach Art des Werkstückes kann die Führungsschiene, auf welcher der den Haltearm tragende Schlitten verfahrbar ist, das Werkstück nur entlang eines Bogens oder auch vollständig ringförmig umschließen.

Da bei vielen Oberflächenbehandlungen die Orientierung, unter welcher das Werkzeug auf die Oberfläche des Werkstücks einwirkt, nicht gleichgültig ist, besitzt der das Werkzeug tragende Haltearm diejenigen Freiheitsgrade, die nicht nur die Führung des Werkzeuges entlang einer bestimmten Linie sondern auch die Einstellung einer gewünschten Orientierung des Werkzeugs an jeder Stelle seines Bewegungsweges ermöglichen.

Der Haltearm kann ein mehrgliedriger Roboterarm sein. Derartige Roboterarme sowie deren Steuerung sind kommerziell erhältlich.

Die Einrichtung zur Erzeugung der Relativbewegung kann so ausgestaltet sein, daß sie das Portal insgesamt verfahren kann. Die "Rohposition" des Werkzeuges in Richtung der Achse der Durchgangsöffnung des Portales wird also dadurch herbeigeführt, daß das gesamte Portal entsprechend verstellt wird. Eine Bewegung des Portales während der Oberflächenbearbeitung selbst findet, wie oben schon erwähnt, nur ausnahmsweise dann statt, wenn die Reichweite des Haltearmes in Richtung der Achse der Durchgangsöffnung nicht ausreicht.

Die Einrichtung zur Erzeugung der Relativbewegung kann auch so ausgestaltet sein, daß sie das Werkstück gegenüber dem Portal verfahren kann. Auch hier gilt, daß das Verfahren des Werkstückes gegenüber dem Portal in der Regel nur der Herbeiführung der Ausgangsposition des Werkzeuges dient.

Die Einrichtung zur Erzeugung der Relativbewegung ist bei einem anderen Ausführungsbeispiel der Erfindung so ausgebildet, daß sie das Werkzeug in Richtung der Achse der Durchgangsöffnung des Portales verstellen kann. Diese Ausgestaltung hat den Vorteil, daß diejenigen Teile, welche parallel zur Achse der Durchgangsöffnung zu verstellen sind, nämlich der Haltearm und das Werkzeug selbst, verhältnismäßig leicht sind und daher die Mittel, mit welchen die achsparallele Bewegung erzeugt wird, verhältnismäßig einfach gehalten werden können.

In diesem Zusammenhang kommt insbesondere eine Ausgestaltung der Erfindung in Frage, bei welcher die Einrichtung zur Erzeugung der Relativbewegung von dem Haltearm selbst gebildet ist, der hierzu aus mindestens vier miteinander verbundenen Gliedern besteht, wobei
a) das erste Glied an dem Schlitten um eine Achse motorisch drehbar befestigt ist, die bezogen auf die Durchgangsöffnung des Portales in azimutaler Richtung verläuft;
b) das zweite Glied an dem ersten Glied um eine Achse motorisch drehbar befestigt ist, die ebenfalls bezogen auf die Durchgangsöffnung des Portals in azimutaler Richtung verläuft;
c) das dritte Glied an dem zweiten Glied um die Achse des zweiten Gliedes motorisch verdrehbar befestigt ist;
d) das das Werkzeug tragende vierte Glied an dem dritten Glied um eine Achse verdrehbar ist, die senkrecht zur Achse des dritten Gliedes verläuft.

Der so ausgestaltete Haltearm entspricht im wesentlichen einem vierachsigen, konventionellen Roboterarm, wobei die Verfahrbarkeit des den Haltearm tragenden Schlittens entlang der Führungsschiene als fünfter Bewegungsfreiheitsgrad ("fünfte Achse") hinzutritt. Der Begriff "azimutal" bedeutet dabei eine Richtung, die im wesentlichen in einer zur Ebene des Portals parallelen Ebene liegt und im wesentlichen senkrecht zu derjenigen Richtung verläuft, in welcher das Werkzeug auf das Werkstück zu verstellt wird. Bei einer kreisbogenförmigen Führung des Portales steht also die azimutale Richtung senkrecht auf der radialen Richtung.

Die Beweglichkeit und Reichweite des Haltearmes werden bei derjenigen Ausführungsform der Erfindung noch zusätzlich erhöht, bei welcher das erste Glied an dem Schlitten mittelbar über einen Drehschemel befestigt ist, der um eine zur Achse der Durchgangsöffnung im wesentlichen parallele Achse verdrehbar ist. Bei dieser Ausführungsform sind die Schwenkachsen der ersten beiden Glieder des Haltearmes nur in einer bestimmten Position des Drehschemels azimutal ausgerichtet. Sie wandern bei einer Verdrehung des Drehschemels aus dieser Position aus der azimutalen Ausrichtung heraus, bleiben aber dabei in einer zur Ebene des Portals parallelen Ebene.

Die Einrichtung zur Erzeugung der Relativbewegung kann alternativ auch einen parallel zur Achse der Durchgangsöffnung motorisch bewegbaren Schlitten umfassen, der an dem auf der Führungsschiene verfahrbaren Schlitten befestigt ist und an dem der Haltearm angebracht ist. Hier wird also die zur Achse der Durchgangsöffnung des Portals parallele Relativbewegung zwischen dem Werkstück und dem Werkzeug durch eine Axialbewegung des den Haltearm und damit das Werkzeug haltenden zweiten Schlittens herbeigeführt.

Das Portal kann an gegenüberliegenden Stirnflächen jeweils eine Führungsschiene tragen, auf welcher mindestens ein einen Haltearm tragender Schlitten verfahrbar ist. Auf diese Weise lassen sich an ein und demselben Portal mehrere Schlitten und damit Werkzeuge anbringen, die unabhängig voneinander verfahrbar sind. Hierdurch wird die Kapazität der Vorrichtung insgesamt vergrößert; große Werkstücke können schneller bearbeitet werden.

Dem gleichen Ziel dient diejenige Ausgestaltung der Erfindung, bei welcher mindestens eine Führungsschiene vorgesehen ist, auf welcher mehrere einen Haltearm und damit ein Werkzeug tragende Schlitten verfahrbar sind. Der Bewegungsweg von jedem Schlitten auf dieser Führungsschiene ist selbstverständlich jeweils durch die Position desjenigen oder derjenigen weiteren Schlitten begrenzt, der sich bzw. die sich auf derselben Führungsschiene bewegt bzw. bewegen.

In vielen Fällen reicht es aus, wenn die Führungsschiene kreisförmig oder kreisbogenförmig gekrümmt ist, um alle Oberflächenbereiche des Werkstückes im wesentlichen gleich gut erreichen zu können. Bei sehr unregelmäßigen Formen des Werkstückes ist es jedoch auch möglich, die Form der das Werkstück umgebenden Führungsschiene an die Kontur des Werkstückes anzupassen. Hier können beispielsweise zwischen Bögen, die keine Kreisbögen sein müssen, geradlinige Abschnitte eingefügt werden, so daß die Führungsschiene entlang des gesamten oder eines Teiles des Umfanges eines abgerundeten Polygons, z. B. eines Rechteckes, eines Dreieckes oder dgl. verläuft.

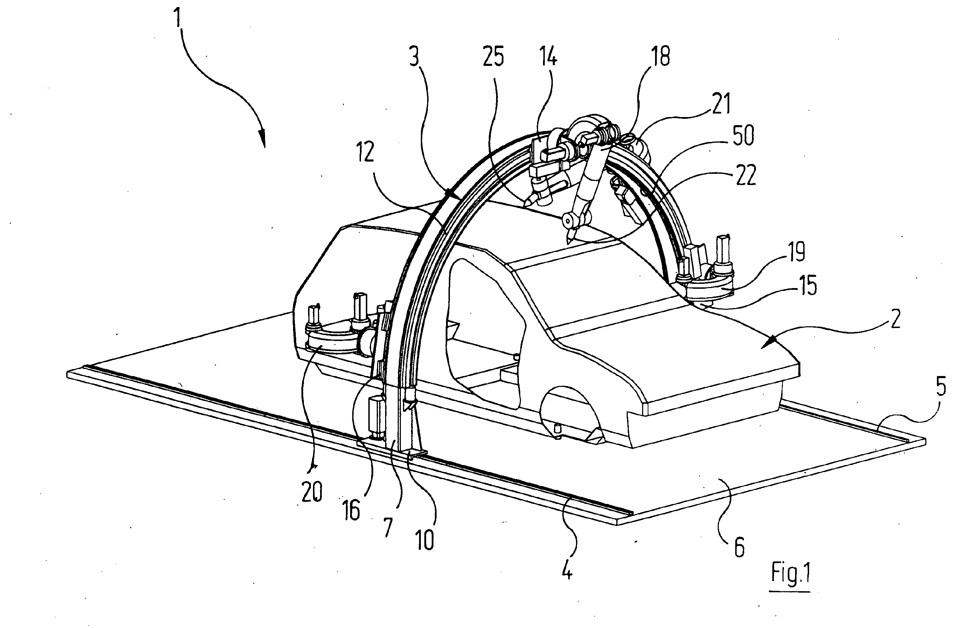

Ein Ausführungsbeispiel der Erfindung wird nachfolgend anhand der Zeichnung näher erläutert; es zeigen
- Figur 1: perspektivisch eine Vorrichtung zur Aufbringung von Klebstoffraupen auf eine Fahrzeugkarosserie;
- Figur 2: eine andere Perspektive der Vorrichtung von Figur 1;

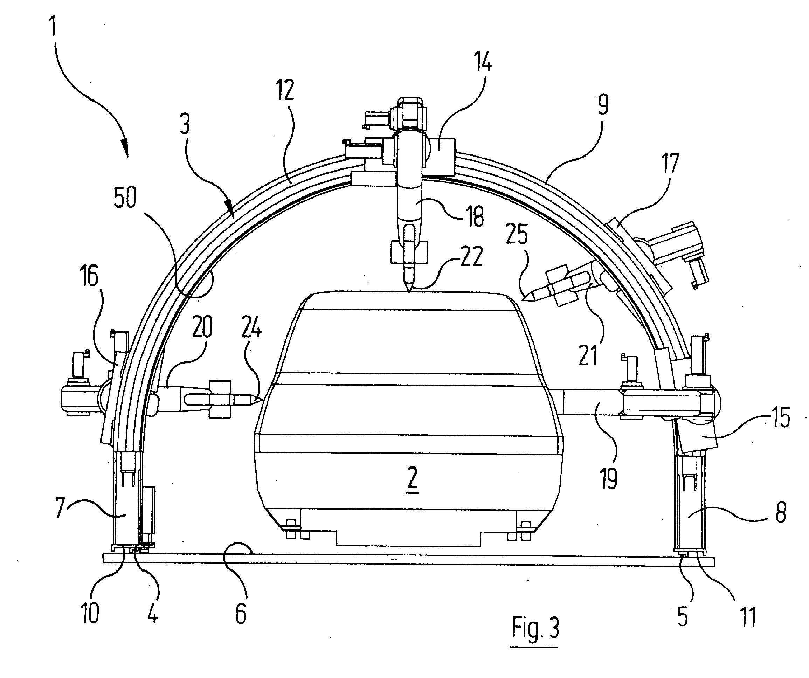

- Figur 3: die Vorderansicht der Vorrichtung der Figuren 1 und 2;

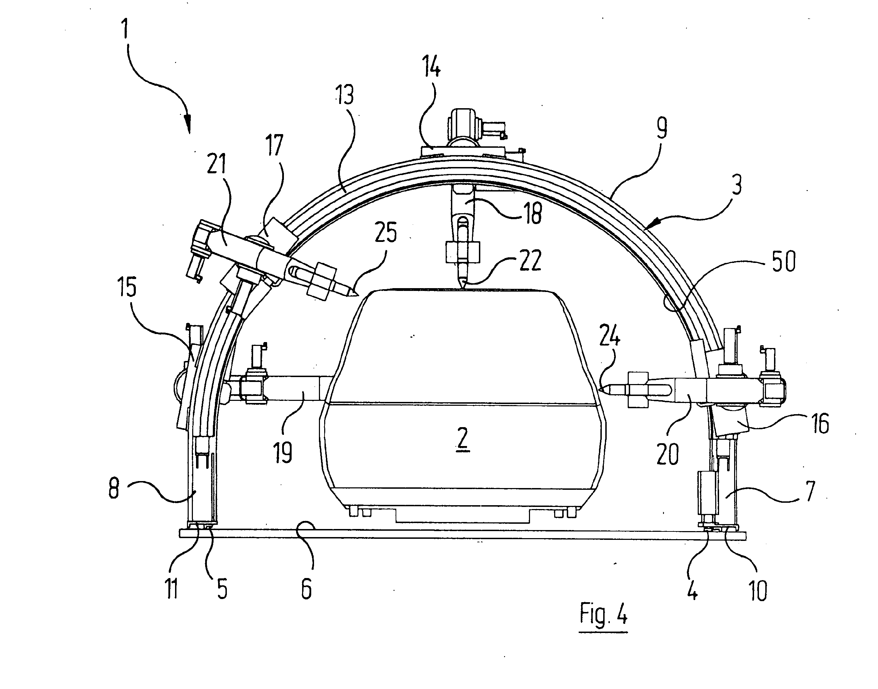

- Figur 4: die Rückansicht der Vorrichtung der Figuren 1 bis 3;
- Figur 5: die Seitenansicht der Vorrichtung der Figuren 1 bis 4;

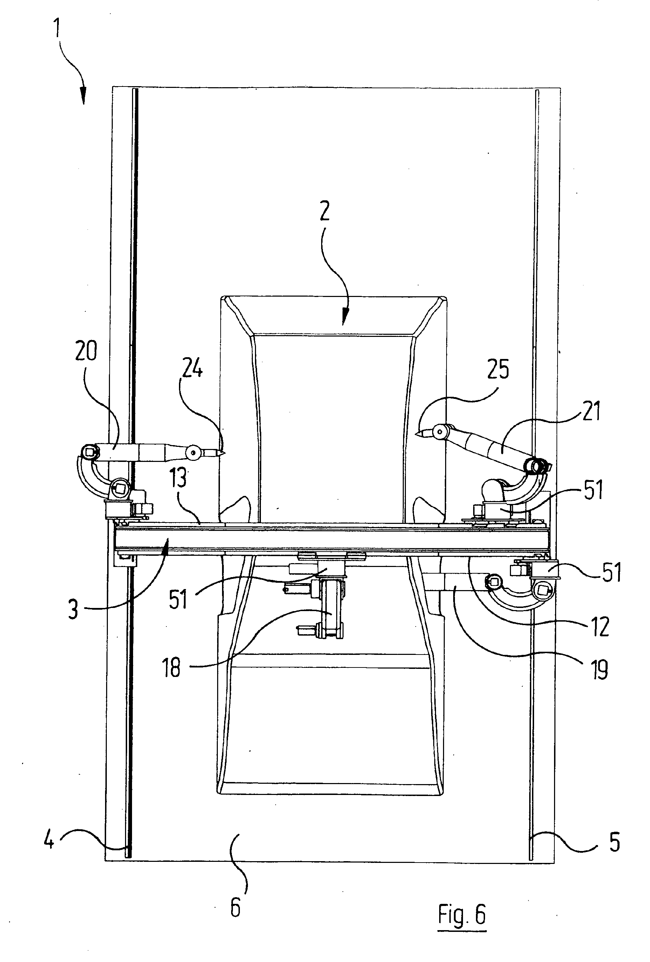

- Figur 6: die Draufsicht auf die Vorrichtung der Figuren 1 bis 5;
- Figur 7: in einer vergrößerten Perspektive einen Ausschnitt der Vorrichtung der Figuren 1 bis 6 im Bereich eines Haltearmes.

Die in der Zeichnung dargestellte und insgesamt mit dem Bezugszeichen 1 gekennzeichnete Vorrichtung dient dazu, auf Fahrzeugkarosserien 2 Kleb- oder Dichtstoffraupen aufzubringen, die mehr oder weniger komplizierten, geschlossenen oder nicht geschlossenen Linien auf äußeren oder inneren Oberflächenbereichen der jeweiligen Fahrzeugkarosserie 2 folgen. Die Vorrichtung 1 weist ein Portal 3 mit einer Durchgangsöffnung 50 auf, welches die in der 'Durchgangsöffnung 50 positionierte Fahrzeugkarosserie 2 überbrückt und dabei annähernd konstanten Abstand von dieser aufweist.

Das Portal 3 ist entlang zweier Schienen 4, 5, die sich parallel auf beiden Seiten der Fahrzeugkarosserie 2 auf dem Raumboden 6 erstrecken, motorisch verfahrbar. Es umfaßt zwei verhältnismäßig kurze vertikale Säulen 7, 8, die an ihren oberen Enden durch eine halbkreisförmige Tragstruktur 9 verbunden sind. Die Säulen 7, 8 sind an ihren unteren Enden mit Fahrwerken 10, 11 versehen, die in der Zeichnung nur schematisch dargestellt sind und das Verfahren des Portals 3 auf den Schienen 4 und 5 ermöglichen.

Sowohl auf der vorderen als auch auf der hinteren Stirnseite der halbkreisförmigen Tragstruktur 9 ist jeweils eine ebenfalls halbkreisförmige Führungsschiene 12 bzw. 13 befestigt. Auf jeder dieser Führungsschienen 12, 13 sind jeweils zwei Schlitten 14, 15, 16, 17 verfahrbar, die jeweils einen als Haltearm dienenden Roboterarm 18, 19, 20, 21 tragen. Jeder dieser Roboterarme 18, 19, 20, 21 hält an seinem freien Ende eine Kleb- oder Dichtstoffpistole 22, 23, 24, 25. Nachfolgend wird der Einfachheit halber nur noch von einer Klebstoffpistole gesprochen.

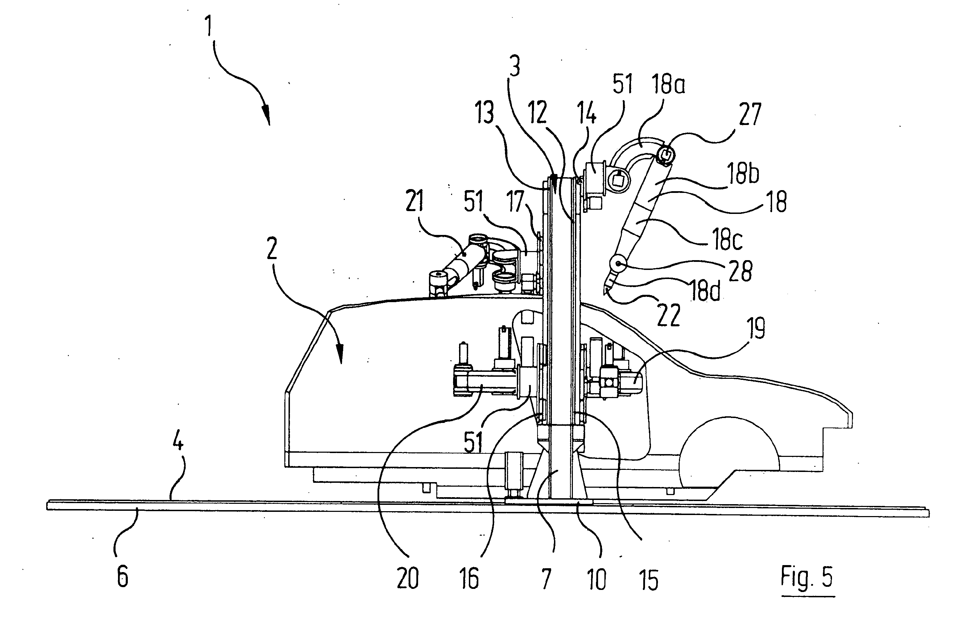

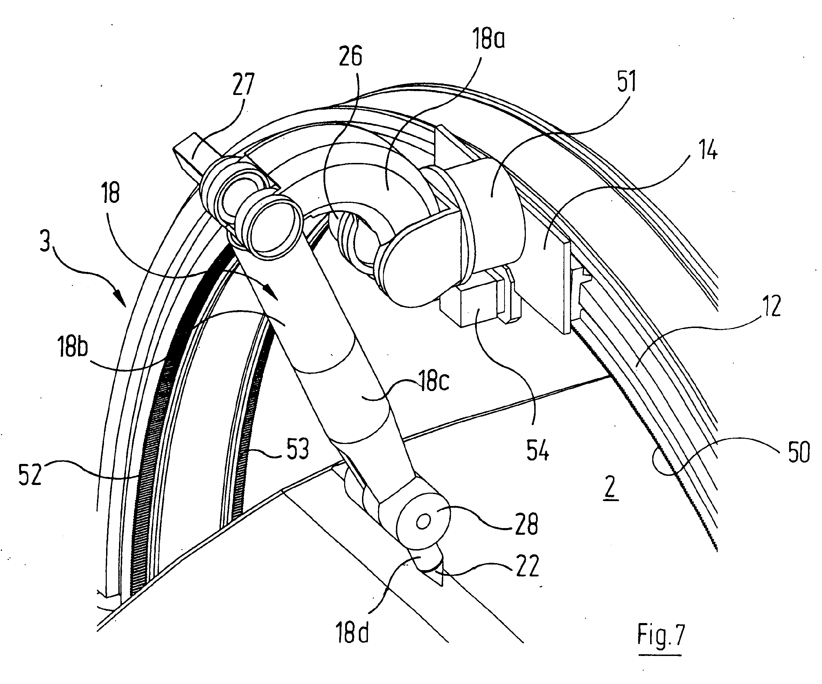

Alle Roboterarm 18 bis 21 sind identisch aufgebaut. Die Bauweise sei nachfolgend an Hand der Figuren 5 und 7 für den Roboterarm 18 näher erläutert:

Der Roboterarm 18 umfasst insgesamt vier Glieder: Ein erstes Glied 18a, das viertelkreisförmig gebogen ist, ist an seinem einen Ende mit einem Drehschemel 51 gelenkig verbunden, der seinerseits um eine Achse, die parallel zur Achse der Durchgangsbohrung 50 verläuft, verdrehbar an dem Schlitten 14 befestigt ist. Diese Drehbewegung geschieht mit Hilfe eines in der Zeichnung nicht erkennbaren Motors. Die Schwenkbewegung des ersten Gliedes 18a gegenüber dem Drehschemel 51 wird mit Hilfe eines Motors 26 bewerkstelligt. Die Schwenkachse verläuft dabei in einer Ebene, die parallel zu der von dem Portal 3 aufgespannten Ebene liegt, und steht bei der in der Zeichnung dargestellten Position des Drehschemels 51 im wesentlichen senkrecht zur Radialrichtung bezogen auf die halbkreisförmige Tragstruktur 9. Diese Richtung wird hier "azimutal" genannt. Bei einer Verdrehung des Drehschemels 51 aus dieser Position verläßt die Schwenkachse die azimutale Ausrichtung, bleibt jedoch in einer Ebene, die zu der von dem Portal 3 aufgespannten Ebene im wesentlichen parallel ist.

Ein zweites Glied 18b ist an dem zweiten Endbereich des ersten Gliedes 18a angelenkt. Diese Schwenkbewegung erfolgt unter der Einwirkung eines Motors 27. Die entsprechende Schwenkachse ist parallel zur ersten zwischen dem ersten Glied 18a und dem Drehschemel 51 wirksamen Schwenkachse. Das dritte Glied 18c des Roboterarmes 18 setzt das zweite Glied 18b koaxial fort und ist um die gemeinsame Achse motorisch verdrehbar. Der entsprechende Motor ist in der Zeichnung nicht erkennbar. Am äußeren Ende des dritten Gliedes 18c ist ein viertes Glied 18d angelenkt, das mit Hilfe eines Motors 28 verschwenkt werden kann. Die entsprechende Schwenkachse verläuft senkrecht zur Achse der Glieder 18b und 18c. Das vierte Glied 18d trägt an seinem freien Ende die Spritzpistole 22.

Wie insbesondere aus der Figur 7 zu erkennen ist, sind an der Innenmantelfläche der halbkreisförmigen Tragstruktur 9 zwei kreisbogenförmige gekrümmte Zahnstangen 52, 53 angebracht. Diese Zahnstangen 52, 53 wirken mit Antriebsritzeln von Motoren 54 zusammen, mit denen die Schlitten 14, 15, 16, 17 auf den Führungsschienen 12, 13 verfahrbar sind. Die Zahnstangen 52, 53 können alternativ auch auf der Außenmantelfläche oder den Stirnflächen der Tragstruktur 9 befestigt sein.

Der beschriebene Roboterarm 18 und damit jeder Roboterarm 18 bis 21 der Vorrichtung 1 besitzen somit sechs Freiheitsgrade, in der Sprache der Robotertechnik also sechs "Achsen". Einen Freiheitsgrad, welcher der Bewegung des jeweiligen Schlittens 14 bis 17 entlang der entsprechenden Führungsschiene 12, 13 entspricht, drei Schwenk- und zwei Dreh-Freiheitsgrad. Auf diese Weise ist es möglich, daß jeder Roboterarm 18 bis 23 innerhalb eines bestimmten Bereiches mit der Spitze der Klebstoffpistole 22 bis 25 eine vorprogrammierte Linie auf der Oberfläche der Fahrzeugkarosserie 2 nachfährt und dabei darüber hinaus eine gewünschte Orientierung der Klebepistole 22c bis 25 gegenüber der Oberfläche der Fahrzeugkarosserie 2 beibehält.

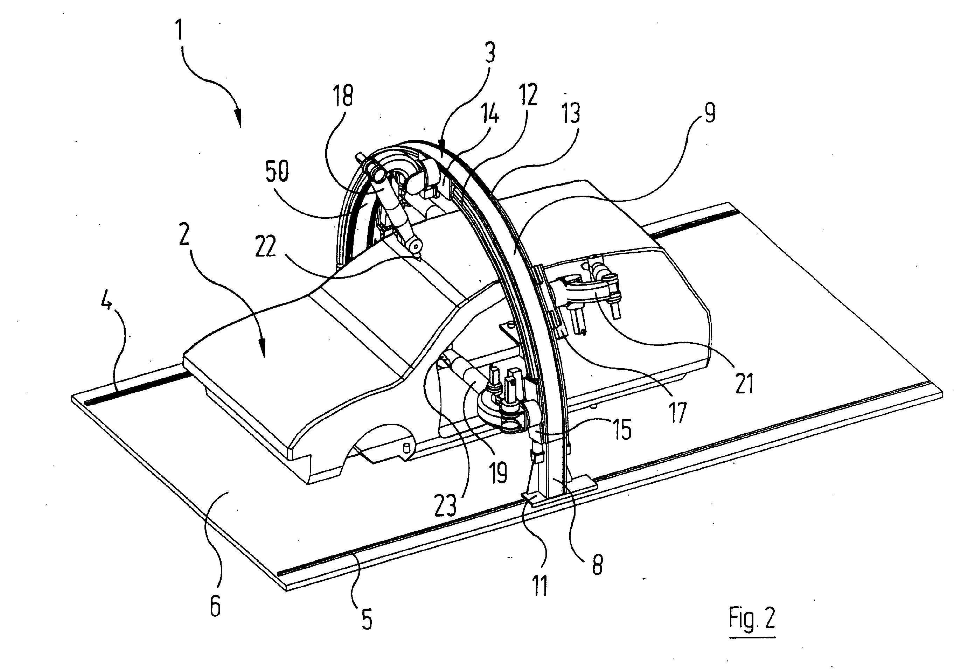

Dabei können nicht nur äußere sondern auch innere Oberflächenbereiche der Fahrzeugkarosserie 2 erreicht werden. So erstreckt sich, wie insbesondere der Figur 2 zu entnehmen ist, der Haltearm 19 durch ein Fenster der Fahrzeugkarosserie in deren Inneres, um dort eine Klebstoffraupe aufzubringen.

Die oben beschriebene Vorrichtung 1 arbeitet wie folgt:

Die Fahrzeugkarosserie 2 wird mit Hilfe eines in der Zeichnung nicht dargestellten Transportsystemes unter die Tragstruktur 9 in die Durchgangsöffnung 50 des Portales 3 gebracht und dort grob positioniert. Nunmehr verfährt das Portal 3 so, daß sich möglichst viele mit Klebstoff zu versehende Linien auf der Fahrzeugkarosserie 2 im Bereich der Roboterarme 18 bis 21 befinden. Mit Hilfe der Schlitten 14 bis 17 werden die Roboterarme 18 bis 21 entlang der Führungsschienen 12, 13 so positioniert, daß sie aufgrund ihrere sechs Bewegungsfreiheitsgrade alle Bereiche der ihnen jeweils zugewiesenen Klebelinien erreichen können. Die Klebstoffpistolen 22 bis 25 werden nunmehr in Funktion genommen und mit Hilfe der Roboterarme 18 bis 21 entlang der jeweiligen Klebelinie geführt.

Auf diese Weise ist es möglich, verhältnismäßig kurze Roboterarme 18 bis 21 einzusetzen, die mit großer Dynamik, hoher Geschwindigkeit und Präzision arbeiten können. Aufgrund der portalartigen Führungsschienen 12, 13 sind dabei alle Oberflächenbereiche der Fahrzeugkarosserie 2 auf kurzem Wege gut erreichbar.

Normalerweise werden die Bewegungen der Roboterarme 18 bis 21 bei stillstehender Fahrzeugkarosserie 2, bei stillstehendem Portal 3 und bei stillstehenden Schlitten 14 bis 17 durchgeführt. Auf diese Weise läßt sich die große Dynamik, die hohe Geschwindigkeit und die hohe Präzision der verhältnismäßig kleinen Roboterarme 18 bis 21 optimal nutzen. Es ist jedoch auch möglich, bei Klebelinien, welche die Reichweite der einzelnen Roboterarme 18 bis 21 übersteigen, die Bewegung der Roboterarme 18 bis 21 gegenüber den ihnen zugeordneten Schlitten 14 bis 17 durch eine Translationsbewegung der Fahrzeugkarosserie 2 mit Hilfe des nicht dargestellten Transportsystemes und/oder eine Translationsbewegung des Portals 7 auf den Schienen 4, 5 und/oder durch eine Bewegung der Schlitten 14 bis 17 auf den Führungsschienen 12, 13 zu überlagern.

Bei einem in der Zeichnung nicht dargestellten Ausführungsbeispiel haben die Führungsschienen nicht nur die Form halbkreisförmiger Bögen, sondern umschließen das zu bearbeitende Werkstück ringartig von allen Seiten. Die Form der Führungsschienen kann je nach Werkstück von der Kreis- bzw. Kreisbogenform auch abweichen. Es können beispielsweise geradlinige Abschnitte zwischen gebogenen Abschnitten der Führungsschienen eingefügt werden und so polygonähnliche, z.B. annähernd rechteckige oder dreieckige Formen der Führungsschienen eingesetzt werden, wenn hierdurch der annähernd konstante Abstand zwischen den Führungsschienen und dem zu bearbeitenden Werkstück besser eingehalten werden kann.

## Patentansprüche

1. Vorrichtung zur Behandlung der Oberfläche von Werkstücken, insbesondere von Fahrzeugkarosserien, mit
a) einem auf die Oberfläche des Werkstückes einwirkenden Werkzeug;
b) einer Führungseinrichtung für das Werkzeug, die so steuerbar ist, daß das Werkzeug einer vorgegebenen Linie folgt;
**dadurch gekennzeichnet, daß** die Führungseinrichtung umfaßt:
c) ein ständerartiges Portal (3), das seinerseits aufweist:
ca) eine Durchgangsöffnung (50), in welche ein Werkstück (2) einführbar ist;
cb) mindestens eine Führungsschiene (12, 13), die an dem Portal (3) befestigt ist und bogenoder ringförmig um das Werkstück (2) geführt ist;
cc) mindestens einen entlang der Führungsschiene (12, 13) vorzugsweise motorisch verfahrbaren Schlitten (14, 15, 16, 17);
cd) einen an dem Schlitten (14, 15, 16, 17) befestigten Haltearm (18, 19, 20, 21), der an seinem freien Ende das Werkzeug (22, 23, 24, 25) trägt und so ausgestaltet ist, daß das Werkzeug (22, 23, 24, 25) in Richtung auf das Werkstück (2) verstellbar und in unterschiedliche Winkellagen gegenüber der Oberfläche des Werkstücks (2) gebracht werden kann;
d) eine Einrichtung, mit welcher eine Relativbewegung zwischen Werkstück (2) und Werkzeug (22, 23, 24, 25) in Achsrichtung der Durchgangsöffnung (50) herbeigeführt werden kann.

2. Vorrichtung nach Anspruch 1, **dadurch gekennzeichnet,**
**daß** der Haltearm (18, 19, 20, 21) ein mehrgliedriger Roboterarm ist.

3. Vorrichtung nach Anspruch 1 oder 2, **dadurch gekennzeichnet, daß** die Einrichtung zur Erzeugung der Relativbewegung so ausgebildet ist, daß sie das Portal (3) insgesamt verfahren kann.

4. Vorrichtung nach einem der vorhergehenden Ansprüche, **dadurch gekennzeichnet, daß** die Einrichtung zur Erzeugung der Relativbewegung so ausgebildet ist, daß sie das Werkstück gegenüber dem Portal verfahren kann.

5. Vorrichtung nach einem der vorhergehenden Ansprüche, **dadurch gekennzeichnet, daß** die Einrichtung zur Erzeugung der Relativbewegung so ausgebildet ist, daß sie das Werkzeug (22, 23, 24, 25) in Richtung der Achse der Durchgangsöffnung (50) des Portals (3) verstellen kann.

6. Vorrichtung nach Anspruch 5, **dadurch gekennzeichnet,**
**daß** die Einrichtung zur Erzeugung der Relativbewegung von dem Haltearm (18) selbst gebildet ist, der hierzu aus mindestens vier miteinander verbundenen Gliedern (18a bis 18d) besteht, wobei
a) das erste Glied (18a) an dem Schlitten (14) um eine Achse motorisch verdrehbar befestigt ist, die bezogen auf die Durchgangsöffnung (50) des Portals (3) in azimutaler Richtung verläuft;
b) das zweite Glied (18b) an dem ersten Glied (18a) um eine Achse motorisch verdrehbar befestigt ist, die ebenfalls bezogen auf die Durchgangsöffnung (50) des Portals (3) in azimutaler Richtung verläuft;
c) das dritte Glied (18c) an dem zweiten Glied (18b) um die Achse des zweiten Gliedes (18c) motorisch verdrehbar befestigt ist;
d) das das Werkzeug (22) tragende vierte Glied (18d) an dem dritten Glied (18c) um eine Achse verdrehbar befestigt ist, die senkrecht zur Achse des dritten Gliedes (18c) verläuft.

7. Vorrichtung nach Anspruch 6, **dadurch gekennzeichnet,**
**daß** das erste Glied (18a) an dem Schlitten (14) mittelbar über einen Drehschemel (51) befestigt ist, der um eine zur Achse der Durchgangsöffnung (50) des Portals (2) im wesentlichen parallele Achse verdrehbar ist.

8. Vorrichtung nach Anspruch 5, **dadurch gekennzeichnet,**
**daß** die Einrichtung zur Erzeugung der Relativbewegung einen parallel zur Achse der Durchgangsöffnung motorisch bewegbaren Schlitten umfaßt, der an dem auf der Führungsschiene verfahrbaren Schlitten befestigt ist und an dem der Haltearm angebracht ist.

9. Vorrichtung nach einem der vorhergehenden Ansprüche,
**dadurch gekennzeichnet, daß** das Portal (3) an gegenüberliegenden Stirnflächen jeweils eine Führungsschiene (12, 13) trägt, auf welchen mindestens ein einen Haltearm (18, 19, 20, 21) tragender Schlitten (14, 15, 16, 17) verfahrbar ist.

10. Vorrichtung nach einem der vorhergehenden Ansprüche,
**dadurch gekennzeichnet, daß** mindestens eine Führungsschiene (12, 13) vorgesehen ist, auf welcher mehrere einen Haltearm (18, 19, 20, 21) tragende Schlitten (14, 15, 16, 17) verfahrbar sind.

11. Vorrichtung nach einem der vorhergehenden Ansprüche,
**dadurch gekennzeichnet, daß** der Verlauf der Führungsschiene (12, 13) der Kontur des Werkstücks (2) angepaßt ist.
